# EUROPÄISCHE PATENTSCHRIFT

(11) **EP 0 638 222 B1**
(45) Veröffentlichungstag und Bekanntmachung des Hinweises auf die Patenterteilung: **03.07.1996**
(21) Anmeldenummer: 93908817.5
(22) Anmeldetag: 26.04.1993
(51) Int. Cl.: H04Q 11/04, H04M 3/42

(54) **VERFAHREN ZUR ORGANISATION VON STEUERUNGSDATEN FÜR ZWISCHEN MINDESTENS EINER ENDEINRICHTUNG UND EINER GEMEINSAMEN BASISEINRICHTUNG IN KOMMUNIKATIONSSYSTEMEN ABLAUFENDE STEUERUNGSPROZEDUREN**
PROCESS FOR ORGANISING CONTROL DATA FOR CONTROL PROCEDURES TAKING PLACE BETWEEN AT LEAST ONE TERMINAL AND A SHARED CENTRAL STATION IN COMMUNICATION SYSTEMS
PROCEDE PERMETTANT D'ORGANISER DES DONNEES DE COMMANDE POUR DES PROCEDURES DE COMMANDE SE DEROULANT ENTRE AU MOINS UN DISPOSITIF TERMINAL ET UN DISPOSITIF DE BASE COMMUN DANS DES SYSTEMES DE COMMUNICATION

(30) Priorität: 30.04.1992 DE 4214374
(43) Veröffentlichungstag der Anmeldung: 15.02.1995
(73) Patentinhaber: SIEMENS AKTIENGESELLSCHAFT, D-80333 München (DE)
(72) Erfinder: BAUMEISTER, Josef, D-46325 Borken (DE); BOZEK, Gerhard, A-1090 Wien (AT); LINDEMANN, Werner, D-45473 Mülheim (DE)
(86) Internationale Anmeldenummer: DE9300364
(87) Internationale Veröffentlichungsnummer: WO9322885

(56) Entgegenhaltungen:
- EP-A- 0 350 836
- EP-A- 0 419 920
- EP-A- 0 471 877

## Beschreibung

### Verfahren zur Organisation von Steuerungsdaten für zwischen mindestens einer Endeinrichtung und einer gemeinsamen Basiseinrichtung in Kommunikationssystemen ablaufende Steuerungsprozeduren

Die Erfindung betrifft ein Verfahren zur Organisation von Steuerungsdaten für zwischen mindestens einer Endeinrichtung und einer gemeinsamen Basiseinrichtung in Kommunikationssystemen ablaufende Steuerungsprozeduren gemäß dem Oberbegriff des Patentanspruches 1.

Die Organisation von Steuerungsdaten einschließlich des Speicherns und Verwaltens derselben ist in unterschiedlichen Kommunikationssystemen notwendig, z. B. in digitalen Mobilfunksystemen - in denen zwischen einer Basisstation und mehreren Funktelefonen Steuerungsprozeduren ablaufen - in ISDN-Kommunikationssystemen (Integrated Services Digital Network) sowie in Kommunikationssystemen mit Vierdraht-Schnittstellen - in denen jeweils zwischen einer Vermittlungsanlage und mit dieser Vermittlungsanlage verbundenen Endgeräten Steuerungsprozeduren ablaufen. Die Steuerungsprozeduren sind dabei im wesentlichen Prozeduren zum Schreiben und Lesen von Steuerungsdaten, wie z. B. Kurzwahlrufnummern, Daten zur Tonrufsteuerung (Lautstärke, Ruf-Pitch) etc. Die vorstehend genannten Kommunikationssysteme sind dabei jeweils immer nach demselben Grundprinzip aufgebaut:

Neben einer Basiseinrichtung (z. B. Basisstation oder VermittLungsanlage) weist das jeweilige Kommunikationssystem mindestens eine Endeinrichtung (z. B. Funktelefon oder Endgerät) auf, die der Basiseinrichtung zugeordnet ist.

Für die Speicherung der Steuerungsdaten stehen generell in der Basiseinrichtung bzw. den Endeinrichtungen Datenspeicher, z. B. in Form von RAM's, EEPROM's oder EPROM's, zur Verfügung. Die jeweiligen Datenspeicher sind dabei in ihrer Speicherkapazität so bemessen, daß die Steuerungsdaten und auch sonstige von den Basis- bzw. Endeinrichtungen benötigte interne Daten, wie z. B. - im Fall der Funktelefone - Authentisierungsnummern, speicherbar sind.

Zur Verwaltung der in den Datenspeichern gespeicherten Steuerungsdaten war und ist es z. B. in Kommunikationssystemen mit einer Zweidraht-Schnittstelle (z. B. öffentliche Fernsprechnetz mit einer Vermittlungsstation und dieser zugeordneten Telefonen) üblich, daß die Datenspeicher in den Telefonen (Endeinrichtungen) von den Telefonen eigenständig verwaltet werden. Sind in den Telefonen z. B. Kurzwahlrufnummern in einen Datenspeicher gespeichert, so müssen beispielsweise die Telefone - wenn per Tastendruck eine der gespeicherten Kurzwahlrufnummern ausgewählt wird - die Interpretation des Drückens von Tasten und die dazugehörige Prozedurführung - weil bei einem Zweidraht-Kommunikationssystem wie dem öffentlichen Fernsprechnetz nur Nutzdaten und keine Signalisierungs- bzw. Steuerkommandos übertragen werden können - selbständig leisten. Dies erfordert einen entsprechend hohen Aufwand an Hardware und Software ("intelligentes" Telefon).

Eine andere Möglichkeit gespeicherte Steuerungsdaten zu verwalten, besteht für Kommunikationssysteme der eingangs genannten Art darin, daß der die Steuerungsdaten speichernde Datenspeicher ausschließlich in der Basiseinrichtung angeordnet ist und die Basiseinrichtung auch die Verwaltung der gespeicherten Steuerungsdaten übernimmt. Bei dieser Art der Steuerungsdatenorganisation wird der für die Verwaltung der Steuerungsdaten notwendige Hardwareaufwand in den der Basiseinrichtung zugeordneten Endeinrichtungen erheblich reduziert; allerdings erhöhen sich die Speicherkosten für die Basiseinrichtung.

Ein entsprechender Aufbau eines solchen Kommunikationssystems ist beispielsweise aus den Druckschriften Telcom Report 11 (1988) Heft 6, Seiten 222 bis 224 "Hicom 200 - 'Informationsdrehscheibe' für Mittelstand" und Telcom Report 12 (1989) Heft 1-2, Seiten 49 bis 51 "Komfortabel 'auf Draht'" für eine ISDN-Vermittlungsanlage (Basiseinrichtung mit dazugehörigem Endgerät (Endeinrichtung) sowie der Druckschrift Telcom Report 10 (1987) Heft 2, Seiten 130 bis 137 "Auch ohne Schnur 'auf Draht'" für ein Schnurlos-System mit einer Basisstation (Basiseinrichtung) und einem Mobilteil (Endeinrichtung) bekannt.

Die Steuerungsdaten sind dabei jeweils in der Vermittlungsanlage (Hicom 200) bzw. der Basisstation des Schnurlos-Systems gespeichert. Ein Zugriff auf diese Steuerungsdaten (Auswahl einer Kurzwahlrufnummer) erfolgt durch das Aktivieren von frei programmierbaren Funktions- bzw. Namenstasten des Endgerätes bzw. Mobilteiles.

Aufgabe der Erfindung ist es, ein Verfahren zur Organisation von Steuerungsdaten für zwischen mindestens einer Endeinrichtung und einer gemeinsamen Basiseinrichtung in Kommunikationssystemen ablaufende Steuerungsprozeduren anzugeben, bei dem die Steuerungsdaten auf einfache Weise, bei optimaler Ausnutzung der in den Endgeräten zur Verfügung stehenden Speicherkapazität und raschem Zugriff der gemeinsamen Basiseinrichtung auf die Endeinrichtungen organisiert werden.

Diese Aufgabe wird ausgehend von dem in dem Oberbegriff des Patentanspruches 1 definierten Verfahren durch die in dem kennzeichnenden Teil des Patentanspruches 1 angegebenen Merkmale gelöst.

Bei dieser Lösung brauchen die Endeinrichtungen den Ablauf der Steuerungsprozeduren (Prozedurführung) nicht leisten und somit auch keinen Programmspeicherbereich für diese Prozedurführung haben. Da die Prozedurführung vollständig von der Basiseinrichtung geleistet wird, verringert sich dementsprechend der dafür notwendige Aufwand in den Endeinrichtungen. Um aber die in den Endeinrichtungen vorhandene Speicherkapazität gegenüber bekannten Lösungen besser zu nutzen, werden die für den Ablauf der Steuerungsprozeduren benötigten Steuerungsdaten teilweise - dort, wo es aufgrund der Struktur des Kommunikationssystems (Mobilfunksystem, ISDN-Kommunikationssystem, Kommunikationssystem mit einer Vierdraht-Schnittstelle) und der Art der Steuerungsprozeduren und -daten sinnvoll erscheint - ausgelagert. Bei einem Mobilfunksystem sind dies beispielsweise individuelle Funktelefonparameter, wie z. B. Kurzwahlrufnummern, Daten zur Tonrufsteuerung etc. Die Auslagerung solcher Daten bietet sich insbesondere deshalb an, weil die Daten auch - wie im Fall der Kurzwahlrufnummern - von einer Bedienperson durch Prozeduren (z. B. Tastendruck) am Funktelefon generiert werden. Werden die generierten Kurzwahlrufnummern auch in dem Funktelefon gespeichert (Auslagerung der Kurzwahlrufnummern außerhalb der Basisstation), dann stehen jedem Benutzer des Funktelefons stets die benutzerindividuellen Kurzwahlrufnummern zur Verfügung. Bei einer Nichtauslagerung der Kurzwahlrufnummern wäre dies nicht der Fall.

Vorteilhafte Weiterbildungen der Erfindung sind in den Unteransprüchen angegeben.

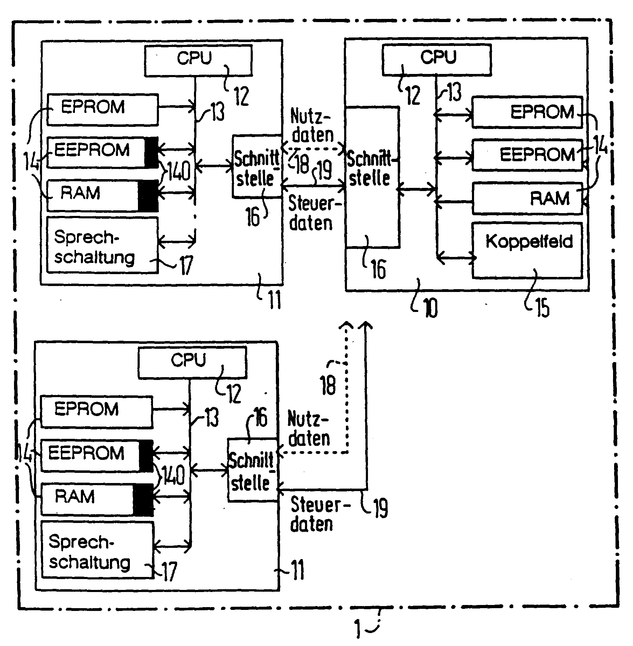

Ein Ausführungsbeispiel der Erfindung ist anhand der Figur 1 erläutert.

Figur 1 zeigt ein Mobilfunksystem 1 mit einer Basisstation 10 und zwei Funktelefonen 11, die nur mit ihren elektronischen Bauteilen dargestellt sind. In der Basisstation 10 sind dies eine die Steuerungsprozeduren steuernde Zentraleinheit 12 (CPU), die zur Speicherung von Daten für den Ablauf von Steuer- und Verarbeitungsprogrammen über ein Bussystem 13 mit Datenspeichern 14 (EPROM, EEPROM und RAM) verbunden ist. Weiterhin sind die Zentraleinheit 12 und die Datenspeicher 14 über das Bussystem 13 an ein Koppelfeld 15, das als digitales Zeitvielfach für die Informationssteuerung zwischen der Basisstation 10 und den Funktelefonen 11 dient, und an eine Schnittstelle 16 für die Kommunikation mit den Funktelefonen 11 angeschlossen. Bis auf das Koppelfeld 15 sind die in der Basisstation 10 enthaltenen elektronischen Bauteile auch in den Funktelefonen 11 enthalten. Zusätzlich zu den genannten Bauteilen ist in dem jeweiligen Funktelefon 11 noch eine Sprechschaltung 17 enthalten, die mit den übrigen Bauteilen über das Bussystem 13 verbunden ist.

Im Ausführungsbeispiel soll das EEPROM als Datenspeicher für die Steuerungsdaten in beiden Fällen die gleiche Speicherkapazität von 128 Byte (kleinstmögliche Speicherkapazität handelsüblicher EEPROM's) haben.

Die Anzahl der Funktelefone 11, die zu dem Mobilfunksystem 1 gehören, ist nicht auf die zwei in der Figur dargestellten Funktelefone 11 beschränkt, sondern läßt sich in Grenzen vergrößern. So sind z. B. in der Mobilfunktechnik bis zu sechs Funktelefone 11 einer einzigen Basisstation 10 zugeordnet. Die Zuordnung der Funktelefone 11 zur Basisstation 10 erfolgt über Verbindungskanäle 18, 19, auf denen Nutz- bzw. Signalisierungs- und Steuerungsdaten bidirektional übertragen werden. Im Fall des Mobilfunksystems 1 sind diese Verbindungskanäle 18, 19 als Funkübertragungsstrecken ausgebildet. Die Signalisierungs- und Steuerungsdaten werden dabei gemäß der DECT-Vereinbarung (Digital European Cordless Telecommunication) separat von den Nutzdaten in dem Mobilfunksystem 1 übertragen. Diese Methode wird nicht nur in Mobilfunksystemen, sondern auch in ISDN-Kommunikationssystemen (Integrated Services Digital Network) sowie in Kommunikationssystemen mit Vierdraht-Schnittstellen angewendet.

Bei den zwischen der Basisstation 10 und den Funktelefonen 11 auf den als Signalisierungs- bzw. Steuerkanal ausgebildeten Verbindungskanal 19 ablaufenden Steuerungsprozeduren greift die Zentraleinheit 12 der Basisstation 10 über die Schnittstelle 16 auf die in dem jeweiligen Funktelefon 11 in den Datenspeichern 14 (EEPROM, RAM) gespeicherten Steuerungsdaten lesend oder schreibend zu. Durch diese Steuerungsprozeduren, die aufgrund eines in der Basisstation 10 ablaufenden Steuerprogramms veranlaßt werden, kann die Basisstation 10 jederzeit gezielt auf die gespeicherten Steuerungsdaten zugreifen. Bei dem Zugriff der Zentraleinheit 12 der Basisstation 10 auf die Steuerungsdaten werden diese Steuerungsdaten über den als Signalisierungs- bzw. Steuerkanal ausgebildeten Verbindungskanal 19 gemäß eines zwischen der Basisstation 10 und dem jeweiligen Funktelefon 11 vereinbarten Meldungsprotokolls aus den Datenspeichern 14 des Funktelefons 11 abgefragt und der Basisstation 10 zur Verfügung gestellt.

Wie das Verfahren im einzelnen abläuft, soll im folgenden anhand eines praxisbezogenen Anwendungsbeispieles des dargestellten Mobilfunksystems 1 erläutert werden. So sollen beispielsweise in dem Datenspeicher 14, z. B. dem EEPROM des jeweiligen Funktelefons 11 individuelle Kurzwahlziele (Kurzwahlnummern) gespeichert und durch Drücken einer Taste des Funktelefons 11 ausgewählt werden. Die Speicherung erfolgt dabei auf durch die Speicherung der internen Daten des jeweiligen Funktelefons 11 unbesetzt gebliebenen Speicherplätze 140 des Datenspeichers 14 (EEPROM). Da diese Speicherplätze 140 von dem Funktelefon 11 nicht benötigt werden (freie Speicherplatzreserven), werden sie der Basisstation 10 im Sinne der Aufnahme funktelefonindividueller Kurzwahlziele zugeordnet.

Die Zentraleinheit 12 des Funktelefons 11, die das Meldungsprotokoll mit der Basisstation 10 abwickelt, greift auf diese Speicherplätze 140 zu, um die gespeicherten Daten als Protokollelemente der Basisstation 10 zur Verfügung zu stellen. Diese Zugriffe auf die Speicherplätze 140 seitens der Zentraleinheit 12 des Funktelefons 11 sind jedoch auf die angegebene Funktion beschränkt. So ist es z. B. für die Zentraleinheit 12 des Funktelefons 11 nicht möglich, die gespeicherten Daten selbst auszuwerten. Durch diese Auslagerung wird einerseits die Speicherkapazität in dem Datenspeicher 14 (EEPROM) der Basisstation 10 verringert und andererseits die in den Funktelefonen 11 vorhandene Speicherkapazität der Datenspeicher 14 (EEPROM) optimal ausgenutzt. Aufgrund des Tastendrucks am Funktelefon 11, der von der Zentraleinheit 12 in der Basisstation 10 interpretiert wird, werden die entsprechenden, in einem der Funktelefone 11 gespeicherten Daten des Kurzwahlziels von der Zentraleinheit 12 ausgelesen. Die gesamte Verwaltung der auf den Speicherplätzen 140 gespeicherten Daten der Kurzwahlziele obliegt der Zentraleinheit 12 der Basis-station 10. Das Verfahren läuft in der gleichen Weise ab, wenn statt des EEPROM's das RAM oder EPROM als Datenspeicher 14 mit den freien Speicherplätzen 140 zur Verfügung steht.

## Patentansprüche

1. Verfahren zur Organisation von Steuerungsdaten für zwischen mindestens einer Endeinrichtung und einer gemeinsamen Basiseinrichtung in Kommunikationssystemen ablaufende Steuerungsprozeduren, bei dem die Steuerungsdaten der Steuerungsprozeduren gespeichert und verwaltet werden, **dadurch gekennzeichnet**, daß
a) basiseinrichtungsindividuelle Steuerungsdaten von basiseinrichtungsindividuellen Steuerungsprozeduren in Abhängigkeit von der Speicherkapazität in den Endeinrichtungen (11) sowie der Art der basiseinrichtungsindividuellen Steuerungsprozeduren dezentral in Datenspeichern (14) der Endeinrichtungen (11) auf freien Speicherplätzen (140) gespeichert werden,
b) die Auslagerung der basiseinrichtungsindividuellen Steuerungsdaten von der Basiseinrichtung (10) für Zugriffe im Rahmen der zwischen der Basiseinrichtung (10) und den Endeinrichtungen (10) ablaufenden Steuerungsprozeduren verwaltet wird,
c) die basiseinrichtungsindividuellen Steuerungsdaten bei den Zugriffen gemäß einem zwischen der Basiseinrichtung (10) und den Endeinrichtungen (11) vereinbarten Meldungsprotokoll abgefragt und zur Verfügung gestellt werden.

2. Verfahren nach Anspruch 1, **dadurch gekennzeichnet**, daß die Steuerungsprozeduren auf einem von einem Nutzkanal (18) getrennten Signalisierungs- und Steuerkanal (19) des Kommunikationssystems (1) ablaufen.

3. Verfahren nach Anspruch 1 oder 2, **dadurch gekennzeichnet**, daß die Endeinrichtungen (11) als Funktelefone und die Basiseinrichtung (10) als Basis-station mit einem Funkteil und integrierter Vermittlungstechnik ausgebildet sind.

4. Verfahren nach Anspruch 3, **dadurch gekennzeichnet**, daß die Steuerungsdaten Kurzwahlrufnummern umfassen.

5. Verfahren nach Anspruch 3 oder 4, **dadurch gekennzeichnet**, daß die Steuerungsdaten Daten zur Tonrufsteuerung umfassen.

6. Anordnung zur Durchführung des Verfahrens nach einem der Ansprüche 1 bis 5 mit Mitteln (12, 14, 16, 18, 19) zur Speicherung und Verwaltung von Steuerungsdaten für zwischen mindestens einer Endeinrichtung (11) und einer gemeinsamen Basiseinrichtung (10) in Kommunikationssystemen ablaufenden Steuerungsprozeduren, die in der Endeinrichtung (11) und Basiseinrichtung (10) angeordnet sind, **dadurch gekennzeichnet**, daß die Mittel (12, 14, 16, 18, 19) derart ausgebildet sind, daß
a) basiseinrichtungsindividuelle Steuerungsdaten von basiseinrichtungsindividuellen Steuerungsprozeduren in Abhängigkeit von der Speicherkapazität in den Endeinrichtungen (11) sowie der Art der basiseinrichtungsindividuellen Steuerungsprozeduren dezentral in Datenspeichern (14) der Endeinrichtungen (11) auf freien Speicherplätzen (140) gespeichert werden,
b) die Auslagerung der basiseinrichtungsindividuellen Steuerungsdaten von der Basiseinrichtung (10) für Zugriffe im Rahmen der zwischen der Basiseinrichtung (10) und den Endeinrichtungen (10) ablaufenden Steuerungsprozeduren verwaltet wird,
c) die basiseinrichtungsindividuellen Steuerungsdaten bei den Zugriffen gemäß einem zwischen der Basiseinrichtung (10) und den Endeinrichtungen (11) vereinbarten Meldungsprotokoll abgefragt und zur Verfügung gestellt werden.

## Claims

1. Method for organizing control data for control procedures executed between at least one terminating unit and a common base unit in communication systems, in which the control data of the control procedures are stored and managed, characterized in that
a) base-unit-specific control data of base-unit-specific control procedures are stored decentrally at free storage locations (140) in data stores (14) of the terminating units (11) depending on the storage capacity in the terminating units (11) and also on the type of base-unit-specific control procedures,
b) the swapping out of the base-unit-specific control data is managed by the base unit (10) for accesses in the course of the control procedures being executed between the base unit (10) and the terminating units (11),
c) during the accesses the base-unit-specific control data are interrogated and made available in accordance with a call protocol agreed between the base unit (10) and the terminating units (11).

2. Method according to Claim 1, characterized in that the control procedures are executed on a signalling and control channel (19) of the communication system (1) separate from a user channel (18).

3. Method according to Claim 1 or 2, characterized in that the terminating units (11) are designed as radio telephones and the base unit (10) is designed as a base station having a radio unit and integrated switching circuitry.

4. Method according to Claim 3, characterized in that the control data comprise abbreviated dialling numbers.

5. Method according to Claim 3 or 4, characterized in that the control data comprise data for ringing control.

6. Arrangement for carrying out the method according to one of Claims 1 to 5 with means (12, 14, 16, 18, 19) for storing and managing control data for control procedures executed between at least one terminating unit (11) and a common base unit (10) in communication systems, which control procedures are arranged in the terminating unit (11) and base unit (10), characterized in that the means (12, 14, 16, 18, 19) are designed in such a way that
a) base-unit-specific control data of base-unit-specific control procedures are stored decentrally at free storage locations (140) in data stores (14) of the terminating units (11) depending on the storage capacity in the terminating units (11) and also on the type of base-unit-specific control procedures,
b) the swapping out of the base-unit-specific control data is managed by the base unit (10) for accesses in the course of the control procedures being executed between the base unit (10) and the terminating units (11),
c) during the accesses the base-unit-specific control data are interrogated and made available in accordance with a call protocol agreed between the base unit (10) and the terminating units (11).

## Revendications

1. Procédé d'organisation de données de commande pour des procédures de commande se déroulant entre au moins un dispositif terminal et un dispositif commun de base dans des systèmes de communication, dans lequel on mémorise et on gère les données de commande des procédures de commande,
caractérisé en ce que
a) on mémorise des données de commande, propres au dispositif de base, provenant de procédures de commande propres au dispositif de base, en fonction de la capacité de mémorisation dans les dispositifs (11) terminaux ainsi que du type des procédures de commande propres au dispositif de base, de manière décentralisée, dans des mémoires (14) de données des dispositifs (11) terminaux en des emplacements (140) de mémoire libres,
b) on gère le transfert des données de commande propres au dispositif de base et provenant du dispositif (10) de base en vue d'accès pendant des procédures de commande se déroulant entre le dispositif (10) de base et les dispositifs terminaux (10),
c) on interroge les données de commande propres au dispositif de base lors des accès suivant un protocole de messages convenu entre le dispositif (10) de base et les dispositifs terminaux (1) et on les met à disposition.

2. Procédé suivant la revendication 1, caractérisé en ce que les procédures de commande se déroulent sur un canal (19) de signalisation et de commande du système (1) de communication, ce canal étant séparé d'un canal utile (18).

3. Procédé suivant la revendication 1 ou 2, caractérisé en ce que les dispositifs terminaux (11) sont sous forme de radiotéléphones et le dispositif (10) de base est sous forme d'un poste de base comportant une partie radio et un module intégré de commutation.

4. Procédé suivant la revendication 3, caractérisé en ce que les données de commande comprennent des numéros abrégés.

5. Procédé suivant la revendication 3 ou 4, caractérisé en ce que les données de commande comprennent des données de commande de sonnerie.

6. Dispositif pour la mise en oeuvre du procédé suivant l'une des revendications 1 à 5, comportant des moyens (12,14,16,18,19) de mémorisation et de gestion de données de commande pour des procédures de commande se déroulant entre au moins un dispositif terminal (11) et un dispositif (10) commun de base dans des systèmes de communication, ces moyens étant disposés dans le dispositif (11) terminal et le dispositif (10) de base, caractérisé en ce que les moyens (12,14,16,18,19) sont tels que
a) des données de commande propres au dispositif de base et provenant de procédures de commande propres au dispositif de base sont mémorisées en fonction de la capacité de mémorisation dans les dispositifs (11) terminaux et du type des procédures de commande propres au dispositif de base de manière décentralisée dans des mémoires (14) de données des dispositifs terminaux (11) en des emplacements (140) de mémoire libres,
b) le transfert des données de commande propres au dispositif de base et provenant du dispositif (10) de base est géré en vue d'accès pendant des procédures de commande se déroulant entre le dispositif (10) de base et les dispositifs terminaux (10),
c) les données de commande propres au dispositif de base sont interrogées lors des accès suivant un protocole de messages convenu entre le dispositif (10) de base et les dispositifs terminaux (11) et sont mises à disposition.
